# EUROPEAN PATENT SPECIFICATION

(11) **EP 3 499 133 B1**
(45) Date of publication and mention of the grant of the patent: **14.06.2023**
(21) Application number: 18207818.8
(22) Date of filing: 22.11.2018
(51) Int. Cl.: F24C 15/20

(54) **METHOD FOR CONTROLLING AIR PURIFICATION OF COOKER HOOD AND COOKER HOOD**
VERFAHREN ZUR STEUERUNG DER REINIGUNG VON DUNSTABZUGSHAUBEN SOWIE DUNSTABZUGSHAUBE
PROCÉDÉ DE COMMANDE DE PURIFICATION D'AIR D'UNE HOTTE ASPIRANTE ET HOTTE ASPIRANTE

(30) Priority: 14.12.2017 CN 201711339160
(43) Date of publication of application: 19.06.2019
(73) Proprietor: BSH Hausgeräte GmbH, 81739 München (DE)
(72) Inventor: Chu, Dongyu, Zhaozhuang, Shandong 277315 (CN); Wang, Cheng, Anhui Provinces, Shandong (CN); Yang, Lei, Nanjing, Shandong 210000 (CN)

(56) References cited:
- CN-U- 206 291 411
- KR-A- 20080 106 009
- US-A1- 2013 186 887
- US-A1- 2015 032 264
- US-A1- 2015 192 305

## Description

### BACKGROUND

### Technical Field

The present invention relates to the technical field of household appliances, and specifically to a method for controlling air purification of a cooker hood, and a cooker hood.

### Related Art

Conventional cooker hoods can exhaust fume in kitchens, and now some cooker hoods can also purify air. However, these solutions are merely a simple combination of a conventional cooker hood and an air purifier. A user cannot intelligently choose an operation mode, and such an air purifier usually has a shorter service life.

CN 206 291 411 U discloses a kitchen new trend system, including range hood and furred ceiling. The system has fresh air vent to open on the casing. Fresh air vent passes through the outside of a fresh air pipeline and the 2nd fresh air pipeline communication chamber. A fan and first check valve are installed in the 2nd fresh air pipeline. A second check valve is installed in the return air passageway and a fresh air purifying device is installed in the 2nd fresh air pipeline. This kitchen new trend system can provide uncontaminated air through first check valve of control and second check valve toward the kitchen, when during cooking and after cooking, the new trend system get into interior circulation mode when outdoor environmental pollution is serious to purifying kitchen air.

US2015192305A1 describes a vapor extraction device, which includes a fan box, a fan having a fan motor accommodated in the fan box, and a first sensor arranged in or on the fan box and configured to determine a first odor status of a cooking environment of the vapor extraction device. The fan motor of the fan can be controlled by performing a cooking process detection, performing an odor pollution determination in response to the cooking process detection, and controlling the fan motor to a fan level in response to the odor pollution determination.

KR102008106009A discloses a device and a method for driving a range hood automatically that are provided to control the driving of a fan motor automatically according to the temperature around a burner. A method for operating a range hood automatically includes the steps of sensing the ignition of a burner by a temperature sensor to output a signal to a microcomputer(S300), driving a fan motor of a range hood for a second set time if the temperature increases to a set degree in a first set time(S301-S304), and stopping the fan motor if the temperature is higher than the set temperature by a predetermined degree or less after a predetermined time from the second set time(S305,S306) (see abstract of D5).

### SUMMARY

The problem resolved by embodiments of the present invention is how to intelligently control an air purification function of a cooker hood so as to extend a service life of an air purification module.

In order to resolve the foregoing problem, the present invention provides a method for controlling air purification of a cooker hood with the features according to claim 1. With the method, the operation mode of the cooker hood can be controlled intelligently, thereby extending a service life of an air purification module and improving convenience of a user using the cooker hood.

Preferably, the starting the internal circulation mode includes: sending, to a user, an acknowledgement message for determining whether to start the internal circulation mode, and after the acknowledgement information is received by the user, starting the internal circulation mode and stopping the external discharge mode of the cooker hood. This solution can remind the user to choose the operation mode.

Preferably, when the outdoor air quality level does not meet the preset condition, the method further includes reminding a user to close a window.

Preferably, when the outdoor air quality level meets the preset condition, the method further includes reminding a user to open a window.

According to the invention, when a current indoor air quality level reaches an indoor clean air quality level, the method further includes turning off the cooker hood, where the indoor clean air quality level is an indoor air quality level before cooking.

The present invention further provides a cooker hood with the features of claim 5.

Preferably, the control module is further configured to: send, to a user, an acknowledgement message for determining whether to start the internal circulation mode, and after the acknowledgement information is received from the user, start the internal circulation mode and stop the external discharge mode of the cooker hood.

Preferably, the control module is further configured to remind the user to close a window.

Preferably, the control module is further configured to: when the outdoor air quality level meets the preset condition, continue using the external discharge mode, and/or remind a user to open a window.

According to the invention, the control module is further configured to: when a current indoor air quality level reaches an indoor clean air quality level, turn off the cooker hood, where the indoor clean air quality level is an indoor air quality level before cooking.

Preferably, the cooker hood further includes a button configured to activate the air purification module.

### BRIEF DESCRIPTION OF THE DRAWINGS

FIG. 1 is a schematic structural diagram of a cooker hood according to an embodiment of the present invention;
FIG. 2 is a flowchart of an example method which is not part of the invention;
FIG. 3 shows an embodiment of the present invention, and
FIG. 4 is a flowchart of an operation process of a cooker hood according to an embodiment of the present invention.

### DETAILED DESCRIPTION

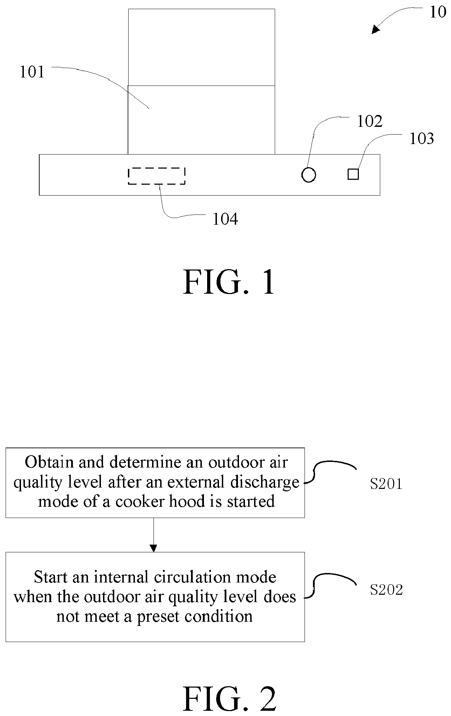

As shown in FIG. 1, a cooker hood 10 includes a hood body, a fan, and other basic components, and further includes an air purification module 101, a wireless communications module 102, an air quality sensor 103, and a controller 104 connected to the preceding components. The air purification module 101 can be disposed at any position on the hood body as required. The wireless communications module 102 is used to obtain an outdoor air quality level via a network. The air quality sensor 103 may be a PM2.5 sensor and is used to control to turn on the cooker hood by detecting an air quality in a kitchen during cooking.

An operation mode of the cooker hood 10 includes an external discharge mode and an internal circulation mode. The external discharge mode is to discharge a fume gas to the outside through a pipeline after separating oil mist from the pumped indoor fume gas, and the internal circulation mode is to purify indoor air by using the air purification module. The cooker hood 10 further includes a button disposed on the hood body, and the button is configured to activate the air purification module.

As shown in FIG. 2, an example which is not part of the invention discloses a method for controlling air purification of a cooker hood 10, and the method includes:
S201: obtaining and determining an outdoor air quality level after an external discharge mode of the cooker hood 10 is started; and
S202: starting an internal circulation mode when the outdoor air quality level does not meet a preset condition. The method further includes reminding a user to close a window.

The starting the internal circulation mode includes: sending, to the user, an acknowledgement message for determining whether to start the internal circulation mode, and after the acknowledgement message is received, starting the internal circulation mode and stopping the external discharge mode of the cooker hood.

When the outdoor air quality level meets the preset condition, the external discharge mode continues, and/or the user is reminded to open the window. Opening the window can speed up the flow of indoor air. Here, the preset condition may be set by a manufacturer when the cooker hood leaves a factory, or may be adjusted by the user according to a specific situation in use.

When a current indoor air quality level reaches an indoor clean air quality level, the cooker hood is turned off, where the indoor clean air quality level is an indoor air quality level before cooking. A standard value may also be set to determine the indoor air quality level.

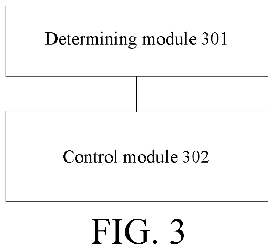

As shown in FIG. 3, an embodiment of the present invention further provides a control device for air purification of a cooker hood, including: a determining module 301, configured to: after an external discharge mode of the cooker hood is started, obtain and determine an outdoor air quality level; and a control module 302, configured to: when the outdoor air quality level does not meet a preset condition, start an internal circulation mode.

The control module 302 is further configured to: send, to a user, an acknowledgement message for determining whether to start the internal circulation mode, and after the acknowledgement message is received, start the internal circulation mode and stop the external discharge mode of the cooker hood.

The control module 302 is further configured to remind the user to close a window.

The control module 302 is further configured to: when the outdoor air quality level meets the preset condition, continue using the external discharge mode, and/or remind a user to open a window.

The control module 302 is further configured to: when a current indoor air quality level reaches an indoor clean air quality level, turn off the cooker hood, where the indoor clean air quality level is an indoor air quality level before cooking.

The operation of the cooker hood is described in detail below.

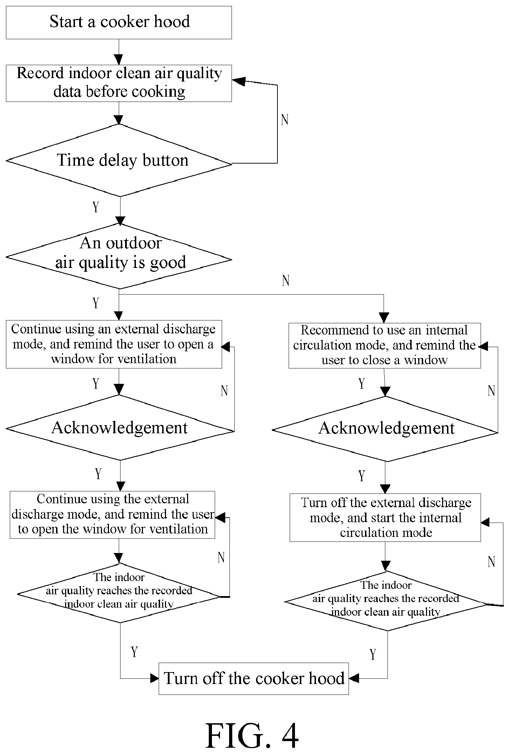

As shown in FIG. 4, when a user is cooking in a kitchen, a cooker hood uses a PM2.5 sensor to detect an air quality in the kitchen in real time. When the air quality in the kitchen becomes worse, the user is reminded to turn on the cooker hood, or the cooker hood is automatically turned on according to the data detected by the sensor. In addition, the sensor records air quality data at a time before the user begins cooking, and the data is defined as a clean air quality level, because indoor air at that time is relatively clean.

The cooker hood further has an operation mode selection function, which is activated by using a time delay button. When the cooker hood has been started and operates in an external discharge mode, it is determined whether the time delay button has been pressed or activated at this time. If yes, the cooker hood further determines whether an outdoor air quality is good or not according to an outdoor air quality level obtained by a network in real time. The standard of determination can be set according to an actual situation.

When the outdoor air quality is good at this time, the cooker hood continues operating in the external discharge mode. Preferably, the user may further be reminded to open a window to assist in cleaning the indoor air. In addition, the user can be reminded to participate in a mode control. Specifically, when a condition is met, the user is reminded to continue using the external discharge mode and open the window, and after receiving acknowledgement information from the user, continue running the external discharge mode. When an indoor air quality level reaches the preceding clean air quality level, the cooker hood stops operation.

When the outdoor air quality at this time does not meet a preset standard, an air purification module is turned on to start an internal circulation mode. Optionally, when the condition is not met, the user may also be reminded to use the internal circulation mode and close the window, and after receiving acknowledgement information from the user, close the external discharge mode and start the internal circulation mode. When the indoor air quality level reaches the preceding clean air quality level, the cooker hood stops operation.

Although the present invention is disclosed above, the present invention is not limited thereto. Therefore, the protection scope of the present invention should be subject to the scope defined by the claims.

## Claims

1. A method for controlling air purification of a cooker hood (10), wherein an operation mode of the cooker hood (10) comprises an external discharge mode and an internal circulation mode, and the method comprises:
recording air quality data at a time before the user begins cooking by use of a sensor (103) and defining the data as a clean air quality level,
when the air quality in the kitchen becomes worse, reminding the user to turn on the cooker hood or turning on the cooker hood automatically according to the data detected by the sensor (103),
determining whether a time delay button has been pressed or activated, when the cooker hood has been started and operates in an external discharge mode,
in the affirmative, further determining by the cooker hood, whether an outdoor air quality is good or not according to an outdoor air quality level by a network in real time,
when the outdoor air quality is good, continuing operating the cooker hood in the external discharge mode,
when the outdoor air quality does not meet a preset standard, turning on the air purification module to start an internal circulation mode and
when the indoor air quality level reaches the preceding clean air quality level, the cooker hood stopping operation.

2. The method according to claim 1, **characterized in that**, the starting the internal circulation mode comprises: sending, to a user, an acknowledgement message for determining whether to start the internal circulation mode, and after acknowledgement information is received from the user, starting the internal circulation mode and stopping the external discharge mode of the cooker hood (10).

3. The method according to claim 1 or 2, **characterized by** further comprising reminding the user to close a window when the outdoor air quality level does not meet the preset standard.

4. The method according to any one of the preceding claims, **characterized by** further comprising: when the outdoor air quality level meets the preset condition reminding a user to open a window.

5. A cooker hood (10) configured to perform the method of anyone of claims 1 to 4, wherein the cooker hood comprises an air purification module and a wireless communication module that are connected to a control device (104), which comprises:
a determining module, configured to: after the external discharge mode of the cooker hood (10) is started, obtain and determine an outdoor air quality level;
a wireless communications module (102) configured to obtain an outdoor air quality level via a network,
an air quality sensor (103),
a control module (104), configured to: when the outdoor air quality level does not meet a preset condition, start the internal circulation mode and the control module (104) further configured to: when a current indoor air quality level reaches an indoor clean air quality level, turn off the cooker hood (10), wherein the indoor clean air quality level is an indoor air quality level before cooking.

6. The cooker hood according to claim 5, **characterized in that**, the control module (104) is further configured to: send, to a user, an acknowledgement message for determining whether to start the internal circulation mode, and after the acknowledgement information is received from the user, start the internal circulation mode and stop the external discharge mode of the cooker hood (10).

7. The cooker hood according to claim 5 or 6, **characterized in that**, the control module (104) is further configured to remind the user to close a window when the outdoor air quality level does not meet the preset standard.

8. The cooker hood according to any one of the claims 5 to 7, **characterized in that**, the control module (104) is further configured to: when the outdoor air quality level meets the preset condition, continue using the external discharge mode, and/or remind a user to open a window.

9. The cooker hood according to anyone of claims 5 to 8, **characterized by** further comprising a button configured to activate the air purification module (101).

## Patentansprüche

1. Verfahren zum Steuern einer Luftreinigung bei einer Dunstabzugshaube (10), wobei ein Betriebsmodus der Dunstabzugshaube (10) einen Außenablassmodus und einen Innenzirkulationsmodus und das Verfahren Folgendes umfasst:
Aufzeichnen von Luftqualitätsdaten zu einem Zeitpunkt, bevor der Benutzer mit dem Kochen beginnt, mithilfe eines Sensors (103) und Definieren der Daten als Reinluftqualitätsstufe,
wenn sich die Luftqualität in der Küche verschlechtert, Erinnern des Benutzers daran, die Dunstabzugshaube einzuschalten, oder automatisches Einschalten der Dunstabzugshaube entsprechend den vom Sensor (103) erfassten Daten,
Ermitteln, ob eine Zeitverzögerungstaste gedrückt oder aktiviert worden ist, wenn die Dunstabzugshaube gestartet wurde und im Außenablassmodus arbeitet,
wenn dies der Fall ist, ferner Ermitteln durch die Dunstabzugshaube entsprechend einer Außenluftqualitätsstufe über ein Netzwerk in Echtzeit, ob eine Außenluftqualität gut ist,
wenn die Außenluftqualität gut ist, Fortsetzen des Betriebs der Dunstabzugshaube im Außenablassmodus,
wenn die Außenluftqualität eine vorgegebene Norm nicht erfüllt, Einschalten des Luftreinigungsmoduls zum Starten eines Innenzirkulationsmodus und
wenn die Innenluftqualitätsstufe die vorhergehende Reinluftqualitätsstufe erreicht, Einstellen des Betriebs der Dunstabzugshaube.

2. Verfahren nach Anspruch 1, **dadurch gekennzeichnet, dass** das Starten des Innenzirkulationsmodus Folgendes umfasst: Senden einer Bestätigungsmeldung zu einem Benutzer zum Ermitteln, ob der Innenzirkulationsmodus gestartet werden soll, und nach Empfang von Bestätigungsinformationen vom Benutzer Starten des Innenzirkulationsmodus und Stoppen des Außenablassmodus der Dunstabzugshaube (10).

3. Verfahren nach Anspruch 1 oder 2, **dadurch gekennzeichnet, dass** es ferner das Erinnern des Benutzers daran umfasst, ein Fenster zu schließen, wenn die Außenluftqualitätsstufe nicht der vorgegebenen Norm entspricht.

4. Verfahren nach einem der vorhergehenden Ansprüche, **dadurch gekennzeichnet, dass** es ferner Folgendes umfasst: wenn die Außenluftqualitätsstufe die vorgegebene Bedingung erfüllt, Erinnern eines Benutzers daran, ein Fenster zu öffnen.

5. Dunstabzugshaube (10), die so konfiguriert ist, dass sie das Verfahren nach einem der Ansprüche 1 bis 4 durchführt, wobei die Dunstabzugshaube ein Luftreinigungsmodul und ein Drahtloskommunikationsmodul umfasst, die mit einer Steuervorrichtung (104) verbunden sind, welche Folgendes umfasst:
ein Ermittlungsmodul, das so konfiguriert ist, dass es: nach dem Starten des Außenablassmodus der Dunstabzugshaube (10) eine Außenluftqualitätsstufe abfragt und ermittelt,
ein Drahtloskommunikationsmodul (102), das so konfiguriert ist, dass es über ein Netzwerk eine Außenluftqualitätsstufe abfragt,
einen Luftqualitätssensor (103),
ein Steuermodul (104), das so konfiguriert ist, dass es: wenn die Außenluftqualitätsstufe eine vorgegebene Bedingung nicht erfüllt, den Innenzirkulationsmodus startet, und ferner so konfiguriert ist, dass es: wenn eine aktuelle Innenluftqualitätsstufe eine Innen-Reinluftqualitätsstufe erreicht, die Dunstabzugshaube (10) ausschaltet, wobei es sich bei der Innen-Reinluftqualitätsstufe um eine Innenluftqualitätsstufe vor dem Kochen handelt.

6. Dunstabzugshaube nach Anspruch 5, **dadurch gekennzeichnet, dass** das Steuermodul (104) ferner so konfiguriert ist, dass es: einem Benutzer eine Bestätigungsmeldung zum Ermitteln sendet, ob der Innenzirkulationsmodus gestartet werden soll, und nach Empfang der Bestätigungsinformationen vom Benutzer den Innenzirkulationsmodus startet und den Außenablassmodus der Dunstabzugshaube (10) stoppt.

7. Dunstabzugshaube nach Anspruch 5 oder 6, **dadurch gekennzeichnet, dass** das Steuermodul (104) ferner so konfiguriert ist, dass es den Benutzer daran erinnert, ein Fenster zu schließen, wenn die Außenluftqualitätsstufe nicht der vorgegebenen Norm entspricht.

8. Dunstabzugshaube nach einem der Ansprüche 5 bis 7, **dadurch gekennzeichnet, dass** das Steuermodul (104) ferner so konfiguriert ist, dass es: wenn die Außenluftqualitätsstufe die vorgegebene Bedingung erfüllt, weiterhin den Außenablassmodus benutzt und/oder einen Benutzer daran erinnert, ein Fenster zu öffnen.

9. Dunstabzugshaube nach einem der Ansprüche 5 bis 8, **dadurch gekennzeichnet, dass** es ferner eine Taste umfasst, die so konfiguriert ist, dass sie das Luftreinigungsmodul (101) aktiviert.

## Revendications

1. Procédé de commande de la purification d'air d'une hotte aspirante (10), dans lequel un mode de fonctionnement de la hotte aspirante (10) comprend un mode d'évacuation extérieur et un mode de circulation intérieur, et le procédé comprend :
l'enregistrement de données sur la qualité de l'air à un moment avant que l'utilisateur ne commence à cuisiner en utilisant un capteur (103) et en définissant les données comme un niveau de qualité d'air propre,
quand la qualité de l'air dans la cuisine empire, le rappel à l'utilisateur d'allumer la hotte aspirante ou l'allumage automatique de la hotte aspirante selon les données détectées par le capteur (103),
la détermination si un bouton de délai de temporisation été enfoncé ou activé, quand la hotte aspirante a été démarrée et fonctionne en mode d'évacuation extérieur,
dans l'affirmative, la détermination ultérieure par la hotte aspirante, si la qualité de l'air extérieur est bonne ou non selon un niveau de qualité de l'air extérieur par un réseau en temps réel,
quand la qualité de l'air extérieur est bonne, la poursuite du fonctionnement de la hotte aspirante en mode d'évacuation extérieur,
quand la qualité de l'air extérieur ne respecte pas une norme préétablie, l'allumage du module de purification de l'air afin de démarrer un mode de circulation intérieur, et
quand le niveau de qualité de l'air intérieur atteint le niveau de qualité de l'air propre précédent, l'arrêt du fonctionnement de la hotte aspirante.

2. Procédé selon la revendication 1, **caractérisé en ce que**, le début du mode de circulation intérieur comprend : l'envoi, à un utilisateur d'un message de reconnaissance afin de déterminer s'il faut lancer le mode de circulation intérieur, et après réception de l'information de reconnaissance par l'utilisateur, le lancement du mode de circulation intérieur et l'arrêt du mode d'évacuation extérieur de la hotte aspirante (10).

3. Procédé selon la revendication 1 ou 2, **caractérisé en ce qu'**il comprend en outre le rappel à l'utilisateur de fermer une fenêtre lorsque le niveau de qualité de l'air extérieur ne respecte pas la norme préétablie.

4. Procédé selon l'une quelconque des revendications précédentes, **caractérisé en ce qu'**il comprend en outre : lorsque le niveau de qualité de l'air extérieur respecte la condition préétablie, le rappel à un utilisateur d'ouvrir une fenêtre.

5. Hotte aspirante (10) configurée afin de réaliser le procédé selon l'une quelconque des revendications 1 à 4, dans laquelle la hotte aspirante comprend un module de purification d'air et un module de communication sans fil, qui sont connectés à un dispositif de commande (104), qui comprend :
un module de détermination, configuré pour : après le démarrage du mode d'évacuation extérieur de la hotte aspirante (10), obtenir et déterminer un niveau de qualité de l'air extérieur ;
un module de communication sans fil (102) configuré afin d'obtenir un niveau de qualité de l'air extérieur via un réseau ;
un capteur de qualité de l'air (103) ;
un module de commande (104), configuré pour : lorsque le niveau de qualité de l'air extérieur ne respecte pas une condition préétablie, lancer le mode de circulation intérieur et le module de commande (104) ultérieurement configuré pour : lorsqu'un niveau de qualité de l'air intérieur actuel atteint un niveau de qualité de l'air propre intérieur, couper la hotte aspirante (10), dans lequel le niveau de qualité de l'air propre intérieur est un niveau de qualité de l'air intérieur avant cuisson.

6. Hotte aspirante selon la revendication 5, **caractérisée en ce que** le module de commande (104) est en outre configuré pour : envoyer à un utilisateur un message de reconnaissance afin de déterminer s'il faut démarrer le mode de circulation intérieur, et après réception de l'information de reconnaissance par l'utilisateur, lancer le mode de circulation intérieur et arrêter le mode d'évacuation extérieur de la hotte aspirante (10).

7. Hotte aspirante selon la revendication 5 ou 6, **caractérisée en ce que** le module de commande (104) est en outre configuré afin de rappeler à l'utilisateur de fermer une fenêtre quand le niveau de qualité de l'air extérieur ne respecte pas la norme préétablie.

8. Hotte aspirante selon l'une quelconque des revendications 5 à 7, **caractérisée en ce que** le module de commande (104) est en outre configuré pour : lorsque le niveau de qualité de l'air extérieur respecte la condition préétablie, continuer à utiliser le mode d'évacuation extérieur et/ou rappeler à un utilisateur d'ouvrir une fenêtre.

9. Hotte aspirante selon l'une quelconque des revendications 5 à 8, **caractérisée en ce qu'**elle comprend en outre un bouton configuré afin d'activer le module de purification d'air (101).
